# NEUE EUROPÄISCHE PATENTSCHRIFT

(11) **EP 1 185 808 B2**
(45) Veröffentlichungstag und Bekanntmachung des Hinweises auf die Entscheidung über den Einspruch: **02.01.2008**
(45) Hinweis auf die Patenterteilung: 24.03.2004
(21) Anmeldenummer: 00949111.9
(22) Anmeldetag: 15.06.2000
(51) Int. Cl.: F16J 15/08

(54) **FLACHDICHTUNG UND VERFAHREN ZUM HERSTELLEN EINER FLACHDICHTUNG**
GASKET AND METHOD FOR PRODUCING A GASKET
GARNITURE PLATE ET PROCEDE PERMETTANT DE LA PRODUIRE

(30) Priorität: 22.06.1999 DE 19928580
(43) Veröffentlichungstag der Anmeldung: 13.03.2002
(73) Patentinhaber: REINZ-Dichtungs-GmbH, 89233 Neu-Ulm (DE)
(72) Erfinder: QUICK, Lothar, D-89278 Nersingen (DE)
(74) Vertreter: Pfenning, Meinig & Partner GbR
(86) Internationale Anmeldenummer: PCT/DE2000/001972
(87) Internationale Veröffentlichungsnummer: WO 2000/079156

(56) Entgegenhaltungen:
- EP-A- 0 797 029
- EP-A- 0 853 204
- EP-A- 0 982 517
- DE-A1- 3 543 839
- DE-A1- 3 611 285
- DE-A1- 19 528 031
- DE-A1- 19 711 562
- JP-A- 9 229 196
- US-A- 4 180 211
- US-A- 5 582 415
- US-A- 5 688 860
- US-A- 5 702 111

## Beschreibung

Die Erfindung betrifft eine Flachdichtung gemäß Anspruch 1 sowie ein Verfahren zum Herstellen einer Flachdichtung gemäß Anspruch 19. Als nächstliegender Stand der Technik wird die EP-A- 0 797 029 angesehen.

Bei Flachdichtungen die aus einer bzw. auch mehreren übereinander angeordneten metallischen Lagen gebildet werden, ist es üblich, zur Erhöhung der Dichtwirkung, insbesondere in den kritischen Bereichen, in denen Durchbrüche für die Zylinderbohrungen aber auch andere Durchbrüche für die Durchführung von Bolzen, Schmier- bzw. Kühlmittel angeordnet sind, durch Verformung Sicken auszubilden. Um ein zu starkes Zusammendrücken bzw. eine Verschiebung solcher Sicken infolge der bei der Montage wirkenden Spannkräfte zu vermeiden, ist es üblich an bzw. auf einzelnen metallischen Lagen einer solchen Flachdichtung Verformungsbegrenzer, auch Federwegbegrenzer oder Stopper genannt, auszubilden bzw. anzuordnen.

Zur Ausbildung eines solchen Verformungsbegrenzers ist neben dem Umbiegen einer metallischen Lage in einem Bereich in der Nähe einer solchen Sicke, in EP 0 797 029 A1 auf eine andere Möglichkeit zur Ausbildung eines solchen Verformungsbegrenzers hingewiesen. Dort wird vorgeschlagen, den Verformungsbegrenzer in Form einer Überhöhung auszubilden, wobei hierfür ein hinreichend temperaturbeständiger Duroplast als Transportmedium und Bindemittel unter Zugabe mindestens eines mineralischen Füllstoffes, mit geringem thermischen Ausdehnungskoeffizienten verwendet wird. Diese Komponenten sollen ein hochbelastbares und elastisches Gerüst bilden, mit dem einer unerwünschten übermäßigen Verformung im Sickenbereich entgegengewirkt werden kann. Dabei wird vorgeschlagen, das Bindemittel und ein solcher Füllstoff (Quarzmehl, Rutil, Dolomit oder Wollastonit) im gleichen Verhältnis, günstiger jedoch im Verhältnis 1:1 bis 3:1 Füllstoff zu Bindemittel verwendet werden sollen.

Dies bedeutet, daß das Bindemittel so ausgewählt werden muß, das es nicht nur erhöhten Temperaturen widersteht, sondern auch eine ausreichende Festigkeit hat, um den auftretenden Pressungen und Druckkräften sowie den Schwingungen, die beispielsweise bei Verbrennungsmotoren auftreten, widerstehen zu können, da der Füllmittelanteil entsprechend begrenzt ist. Dieser Aspekt gewinnt mehr und mehr an Bedeutung, da die modernen Verbrennungsmotoren bei höheren Verbrennungsdrücken und demzufolge auch höheren Temperaturen und mit höheren Anforderungen an eine Dichtung betrieben werden.

Da die organischen Bindemittel, wie auch die mineralischen Füllstoffe eine relativ schlechte Wärmeleitfähigkeit aufweisen, behindern die so hergestellten Verformungsbegrenzer den Wärmetransport und es kann zu unerwünschten Temperaturgradienten an einer solchen Dichtung in diesen Bereichen kommen.

Dieser Nachteil kann aber auch nicht ohne weiteres unter Verwendung von Metallpulvern als Füllstoff, wie dies in US 5,582,415 vorgeschlagen wird, beseitigt werden, wenn die bekannten Bindemittel-Füllstoffanteile eingehalten werden. Ein solches Metallpulver als Füllstoff wird bei einem entsprechenden Auftrag allseitig von dem organischen Bindemittel benetzt, wobei sich die zerklüftete Oberflächenstrukturierung solcher Metallpulver ebenfalls nachteilig auswirkt und der größte Teil der einzelnen Metallpulverpartikel durch das organische Bindemittel thermisch voneinander isoliert ist.

Es ist daher Aufgabe der Erfindung, eine Flachdichtung mit mindestens einer metallischen Lage, in der mindestens ein Dichtungsdurchbruch und mindestens eine Sicke ausgebildet sind, mit Verformungsbegrenzern zu versehen, deren Festigkeit erhöht und deren Temperatureigenschaften verbessert sind.

Erfindungsgemäß wird diese Aufgabe mit den Merkmalen des Anspruchs 1 für eine Flachdichtung und den Merkmalen des Anspruchs 19 für ein Verfahren zum Herstellen einer solchen Flachdichtung gelöst. Vorteilhafte Ausgestaltungsformen und Weiterbildungen der Erfindung ergeben sich mit den in den untergeordneten Ansprüchen genannten Merkmalen.

Bei der Erfindung werden Verformungsbegrenzer ebenfalls durch das Aufbringen einer Beschichtung ausgebildet, die zumindest einen Füllstoff und ein Bindemittel enthalten. Dabei wird jedoch mit einem erhöhten Füllstoffanteil gearbeitet, dessen Masseanteil größer als der Bindemittelanteil ist. Außerdem wird ein partikelförmiger Füllstoff verwendet, dessen einzelne Partikel eine kleine Oberfläche im Verhältnis zum Partikelvolumen aufweisen, so daß in der fertigen Beschichtung eine dichte Packung der einzelnen Partikel des Füllstoffes erreicht werden kann und eine relativ große Zahl dieser Partikel unmittelbar aneinandergrenzen, so daß sie sich direkt aneinander abstützen und das verwendete Bindemittel im wesentlichen die Verbindungsfunktion für den Füllstoff und die aufgebrachte Beschichtung sichern muß, wohingegen die Pressungen und Druckkräfte im wesentlichen von dem partikelförmigen Füllstoff getragen werden.

Die verwendeten sphärischen Füllstoffpartikel weisen im Gegensatz zu herkömmlichen pulverförmigen Materialien eine geglättete Oberfläche auf, deren Kanten zumindest abgerundet sind. Sicher ist es am günstigsten, kugelförmige Partikel einzusetzen, da sie bekanntermaßen das kleinste Oberflächen-Volumenverhältnis erreichen können. Bei Verwendung eines solchen Füllstoffes ist eine gute Verarbeitbarkeit, insbesondere beim Auftrag gegeben.

Wie bereits erwähnt, sollte der Füllstoffanteil größer als der Bindemittelanteil sein, wobei ab Verhältnissen von 2:1, also 1/3 Bindemittel und 2/3 Füllstoff, verbesserte Eigenschaften ohne weiteres erreicht werden. Der Füllstoffanteil sollte vorteilhaft weiter erhöht werden und es können Füllgrade oberhalb 90 Masse-% eines solchen Füllstoffes erreicht werden, wobei mit erhöhtem Füllstoffanteil die gewünschten Eigenschaften weiter verbessert werden können.

Die einzelnen Partikel des verwendeten Füllstoffes sollten mittlere Korngrößen im Bereich zwischen 5 und 100 ~im aufweisen, wobei mindestens 80 % der Partikel in diesem Korngrößenbereich liegen sollte.

Zur Verbesserung der Eigenschaften der fertigen Beschichtung kann es außerdem günstig sein, Partikel mit unterschiedlichen Korngrößen zu verwenden, so daß dichtere Packungen der einzelnen Partikel und demzufolge auch höhere Füllgrade erreicht werden können, da kleinere Partikel die Zwischenräume zwischen größeren Partikeln ausfüllen können.

Als Füllstoffmaterialien werden Metalle, Metall-Legierungen, Glas aber auch Keramiken und Mischungen hiervon verwendet, wobei unter Berücksichtigung der Wärmeleitfähigkeit vorteilhaft Siliciumnitrid bzw. Siliciumcarbid als Keramik eingesetzt werden kann.

Ein geeigneter Füllstoff ist eine Kupfer/Zinn-Legierung.

Als geeignetes Bindemittel kann ein Duroplast, beispielsweise ein Epoxidharz, ein Silikonharz oder ein Polyamidharz, insbesondere ein Epoxidharz auf Bisphenol-A-Basis verwendet werden, dabei kann wegen der verringerten Festigkeitsanforderungen auch ein Bindemittel ausgewählt werden, das in Richtung Temperaturbeständigkeit und erhöhter Bindemittelfunktion optimierbar ist.

In dem Ausgangsmaterial für die aufzubringende Beschichtung kann zusätzlich mindestens ein thermoplastischer Zuschlagstoff enthalten sein, der z.B. die Verarbeitbarkeit einer vorbereiteten Mischung verbessert. Ein solcher Zuschlagstoff kann beispielsweise ein PTFE, Polyethylen, ein Polypropylen oder ein Polyamid sein.

Für die verarbeitbarkeit insbesondere beim Aufbringen der Beschichtung ist es günstig, ein Bindemittel zu verwenden, das bereits bei Raumtemperatur eine plastische Verformbarkeit aufweist. Hierfür sind bei den bereits genannten möglichen Duroplasten einige ohne weiteres geeignet. Ein anderes Kriterium für die Auswahl eines solchen Kunststoffes ist der Glaspunkt, Er sollte günstigerweise oberhalb 150 °C liegen, um den auftretenden Temperaturverhältnissen an einem Verbrennungsmotor Rechnung zu tragen.

Da die Sprödigkeit der für die Beschichtung ausgewählten Ausgangsmaterialien gering ist, kann diese ohne weiteres auch vor dem Prägevorgang für die Ausbildung der Sicken aufgebracht werden.

Die den Verformungsbegrenzer bildende Beschichtung kann linienförmig in Form einer geschlossenen aber auch in Form einer unterbrochenen Linie aufgebracht werden. Die Linien können in Breite, Höhe und/oder Form, je Anforderung, variiert werden. Die Anordnung der Beschichtung kann benachbart zu einer Sicke, aber auch unmittelbar in einer Sicke bzw. bei einer mehrlagigen Flachdichtung an einer Lage im Bereich einer Sicke, die in der benachbarten Lage ausgebildet ist, aufgebracht werden.

Wenn die Beschichtung in der Sicke angeordnet ist, kann diese Sicke außenseitig nochmals gesickt sein, so daß sich in die Sicke hinein eine Auswölbung erstreckt.

Die Beschichtung, als Verformungsbegrenzer kann aber auch an sich gegenüberliegenden Seite einer Lage einer Flachdichtung bzw. einer Sicke aufgebracht werden, um den Verformungsbegrenzungseffekt zu sichern.

Insbesondere dann, wenn die Beschichtung in einer Sicke aufgebracht worden ist, kann es vorteilhaft sein, die Beschichtung so auszubilden, daß die nach außen weisende Oberfläche der Beschichtung im wesentlichen aus Bindemittel und/oder einem thermoplastischen Zuschlagstoff besteht, so daß eine solche Oberfläche ebener ausgebildet ist und günstigere Gleiteigenschaften sichert. Für diesen Zweck kann aber auch zusätzlich eine dünne Versiegelungsschicht ausgebildet werden.

Bei der Herstellung einer erfindungsgemäßen Flachdichtung werden der bzw. die Verformungsbegrenzer durch den Auftrag einer, die bereits erwähnten Komponente enthaltenden Mischung auf eine metallische Lage ausgebildet, wobei sich in der Regel ein Aushärtevorgang anschließt, bei dem die Aushärtung mittels eines Energieeintrages, z.B. bei einer Wärmebehandlung durchgeführt wird.

Der Auftrag der vorbereiteten Mischung kann beispielsweise mit einem Druckverfahren, wie dem Matrizendruck oder einem Siebdruckverfahren erfolgen, wobei insbesondere die Breite und Dicke der Beschichtung beim Siebdrucken durch eine entsprechende Ausbildung und Dimensionierung des verwendeten Siebes ohne weiteres eingestellt werden kann.

Nachfolgend soll die Erfindung beispielhaft beschrieben werden.
Dabei zeigen:
- Figur 1: einen Teil einer metallischen Lage einer Flachdichtung mit beidseitig an einer Sicke ausgebildeten Verformungsbegrenzern;
- Figur 2: einen innerhalb einer Sicke ausgebildeten Verformungsbegrenzer;
- Figur 3: einen in einer Sicke ausgebildeten Verformungsbegrenzer mit Gegensicke und
- Figur 4: einen an einem ebenen Teil einer metallischen Lage ausgebildeten Verformungsbegrenzer, der im montierten Zustand in eine Sicke, die in einer benachbarten Lage ausgebildet ist, eingreift.

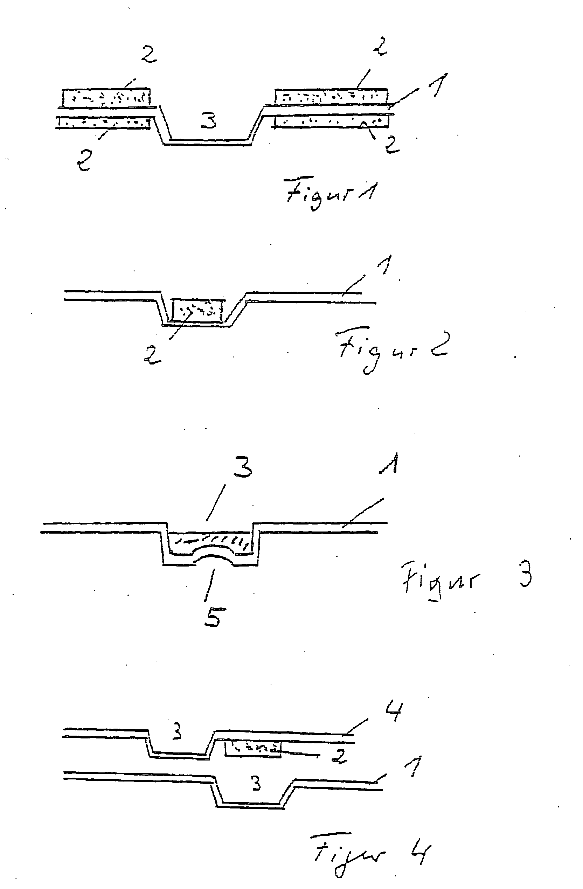

In der Figur 1 sind mehrere verschiedene mögliche Anordnungen für Federbegrenzer, die in Form einer Beschichtung 2 auf eine metallische Lage 1 aufgebracht sind, dargestellt. So ist erkennbar, daß an beiden Seiten einer Sicke 3 sich gegenüberliegend jeweils eine Beschichtung 2 als Verformungsbegrenzer angeordnet sein können. Allein oder zusätzlich können auf der anderen Seite der metallischen Lage 1 ebenfalls Beschichtungen 2 aufgebracht sein. Die Beschichtungen 2 als Verformungsbegrenzer können bis nahezu unmittelbar an den Dichtungsdurchbruch einer Flachdichtung heranreichen.

Die Dicke einer solchen Beschichtung 2 kann im Bereich zwischen 20 und 300 µm liegen.

Ist eine Beschichtung 2 innerhalb einer Sicke 3 auf einer metallischen Lage 1 aufgebracht, wie dies in Figur 2 dargestellt ist, kann die Beschichtung eine Dicke im Bereich zwischen 30 und 250 µm aufweisen, wobei die Dicke der Beschichtung 2 kleiner als die eigentliche Tiefe der Sicke 3 sein kann.

Bei dem in Figur 3 gezeigten Beispiel ist wieder eine Beschichtung 2 innerhalb einer Sicke 3 aufgebracht, wobei bei diesem Beispiel erkennbar ist, daß außenseitig eine weitere Sicke 5 vorhanden ist, so daß sich eine Auswölbung in Richtung des Inneren der Sicke 3 erstreckt. Dies hat sich als günstig erwiesen, da hierbei eine bessere Dichtwirkung entsteht.

Bei dem in der Figur 4 dargestellten Beispiel sind zwei metallische Lagen 1 und 4 einer Flachdichtung dargestellt, wobei auf der metallischen Lage 4 eine Beschichtung 2 aufgebracht ist, die im montierten Zustand einer solchen mehrlagigen Flachdichtung in eine Sicke 3, die in der benachbarten Lage 1 ausgebildet ist, eingreifen kann. Dabei kann die Beschichtung 2 so dimensioniert sein, daß sie die Sicke 3 in der Lage 1 ganz aber auch nur teilweise ausfüllt. Anstelle der Sicke 3 kann auch eine entsprechende Vertiefung in der ansonsten nicht in Form einer Sicke verformten Lage 1 ausgebildet sein.

## Patentansprüche

1. Flachdichtung mit mindestens einer metallischen Lage (1), in der mindesten ein Dichtungsdurchbruch sowie mindestens eine Sicke (3) ausgebildet sind und in und/oder benachbart zur Sicke eine Beschichtung (2) als Verformungsbegrenzer aufgebracht ist, die zumindest aus einem Füllstoff und einem Bindemittel besteht, wobei der Masseanteil des Füllstoffs größer als der Bindemittelanteil ist und der Füllstoff in Form sphärischer einzelner Partikel aus einem Metall, einer Legierung oder einer Keramik oder Mischungen hiervon, die eine geglättete, abgerundete und im Verhältnis zum Partikelvolumen kleine Oberfläche aufweisen, vorliegt.

2. Flachdichtung nach Anspruch 1,
**dadurch gekennzeichnet, daß** die Partikel kugelförmig sind.

3. Flachdichtung nach einem Ansprüche 1 oder 2,
**dadurch gekennzeichnet, daß** mindestens 80 % der Partikel eine mittlere Korngröße im Bereich zwischen 5 und 100 µm aufweisen.

4. Flachdichtung nach Anspruch 1,
**dadurch gekennzeichnet, daß** der Füllstoff aus einer Kupfer/Zinn-Legierung besteht.

5. Flachdichtung nach einem der Ansprüche 1 bis 4,
**dadurch gekennzeichnet, daß** ein Masseverhältnis von Füllstoffen zu Bindemittel von mindestens 2:1 eingehalten ist.

6. Flachdichtung nach einem der Ansprüche 1 bis 5,
**dadurch gekennzeichnet, daß** der Füllstoff mit einem Masseanteil ≥ 90 % in der Beschichtung (2) enthalten ist.

7. Flachdichtung nach einem der Ansprüche 1 bis 6,
**dadurch gekennzeichnet, daß** das Bindemittel ein Duroplast ist.

8. Flachdichtung nach Anspruch 7,
**dadurch gekennzeichnet, daß** der Duroplast ausgewählt ist aus Epoxidharz, Silikonharz und Polyamidharz.

9. Flachdichtung nach Anspruch 7,
**dadurch gekennzeichnet, daß** der Duroplast ein Epoxidharz auf Bisphenol-A-Basis ist.

10. Flachdichtung nach einem der Ansprüche 1 bis 9,
**dadurch gekennzeichnet, daß** zusätzlich mindestens ein thermoplastischer Zuschlagstoff enthalten ist.

11. Flachdichtung nach Anspruch 10,
**dadurch gekennzeichnet, daß** der/die Zuschlagstoff(e) ausgewählt ist aus PTFE, PE, PP und PA.

12. Flachdichtung nach einem der Ansprüche 1 bis 11, **dadurch gekennzeichnet, daß** die Beschichtung (2) linienförmig aufgebracht ist.

13. Flachdichtung nach einem der Ansprüche 1 bis 12, 15. **dadurch gekennzeichnet, daß** die Beschichtung (2) in Form einer Linie unterschiedlicher Breite und/oder Höhe und/oder Form aufgebracht ist.

14. Flachdichtung nach einem der Ansprüche 1 bis 13, **dadurch gekennzeichnet, daß** die Beschichtung (2) an zwei sich gegenüberliegenden Seiten einer metallischen Lage (1) aufgebracht ist.

15. Flachdichtung nach einem der Ansprüche 1 bis 14, **dadurch gekennzeichnet, daß** die Beschichtung (2) auf einer metallischen Lage (4) im Bereich einer Sicke (3) einer zweiten metallischen Lage (1) aufgebracht ist.

16. Flachdichtung nach einem der Ansprüche 1 bis 15, **dadurch gekennzeichnet, daß** die Beschichtung (2) an zwei sich gegenüberliegenden Seiten einer Sicke (3) aufgebracht ist.

17. Flachdichtung nach mindestens einem der Ansprüche 1 bis 16, **dadurch gekennzeichnet, daß** die Beschichtung (2) in einer Sicke (3) angeordnet ist.

18. Flachdichtung nach einem der Ansprüche 1 bis 17, **dadurch gekennzeichnet, daß** die Oberfläche der Beschichtung (2) im wesentlichen aus dem Bindemittel und/oder einem thermoplastischen Zuschlagstoff besteht oder mit einer zusätzlichen Versiegelungsschicht versehen ist.

19. Verfahren zum Herstellen einer Flachdichtung mit mindestens einer metallischen Lage, in der mindestens ein Dichtungsdurchbruch sowie mindestens eine Sicke ausgebildet sind und in und/oder benachbart zur Sicke eine Beschichtung als Verformungsbegrenzer aufgebracht ist, bei dem eine mindestens einen Füllstoff und ein Bindemittel enthaltende Mischung, in der der Masseanteil des Füllstoffs größer als der Bindemittelanteil ist, auf eine metallische Lage (1, 4) aufgebracht wird, wobei ein sphärischer, partikelförmiger Füllstoff aus einem Metall, einer Legierung oder einer Keramik oder Mischungen hiervon, dessen einzelne Partikel eine geglättete, abgerundete und im Verhältnis zum Partikelvolumen kleine Oberfläche aufweisen, verwendet wird; und die aufgebrachte Beschichtung (2) ausgehärtet wird, wobei in der fertigen Beschichtung der Füllstoff in Form sphärischer, einzelner Partikel vorliegt.

20. Verfahren nach Anspruch 19,
**dadurch gekennzeichnet, daß** die Mischung durch einen Energieeintrag ausgehärtet wird.

21. Verfahren nach Anspruch 19 oder 20, **dadurch gekennzeichnet, daß** ein Mischungsverhältnis von Füllstoff zu Bindemittel mit einem Masseanteil von mindestens 2:1 eingestellt wird.

22. Verfahren nach einem der Ansprüche 19 bis 21,
**dadurch gekennzeichnet, daß** der Mischung zusätzlich mindestens ein thermoplastischer Zuschlagstoff zugegeben wird.

23. Verfahren nach einem der Ansprüche 19 bis 22,
**dadurch gekennzeichnet, daß** die Mischung auf die metallische Lage (1, 4) aufgedruckt wird.

24. Verfahren nach einem der Ansprüche 19 bis 23,
**dadurch gekennzeichnet, daß** die Mischung mit einer Wärmebehandlung ausgehärtet wird.

## Claims

1. Flat gasket with at least one metallic layer (1), in which at least one gasket opening as well as at least one bead (3) are formed, and a coating (2) as a deformation delimiter is applied into and/or adjacent to the bead, which consists of at least one filler and one binding agent, whereby the mass proportion of the filler is greater than the binding agent proportion, and the filler is provided in the form of spherical individual particles made of a metal, an alloy, or a ceramic, or mixtures of the same, which comprise a smoothed, rounded surface that is smaller than the particle volume.

2. Flat gasket according to Claim 1, **characterised in that** the particles are spherical.

3. Flat gasket according to one of the Claims 1 or 2, **characterised in that** at least 80% of the particles have an average grain size of between 5 and 100 µm.

4. Flat gasket according to Claim 1, **characterised in that** the filler consists of a copper/pewter alloy.

5. Flat gasket according to one of the Claims 1 to 4, **characterised in that** a mass ratio of fillers to binding agents of at least 2:1 is maintained.

6. Flat gasket according to one of the Claims 1 to 5, **characterised in that** the filler is present in the coating (2) with a mass proportion of ≥ 90%.

7. Flat gasket according to one of the Claims 1 to 6, **characterised in that** the binding agent is a duroplast.

8. Flat gasket according to Claim 7, **characterised in that** the duroplast is selected from epoxy resin, silicone resin, and polyamide resin.

9. Flat gasket according to Claim 7, **characterised in that** the duroplast is an epoxy resin on a bisphenol A basis.

10. Flat gasket according to one of the Claims 1 to 9, **characterised in that** at least one additional thermoplastic additive is present.

11. Flat gasket according to Claim 10, **characterised in that** the additive(s) is/are selected from PTFE, PE, PP and PA.

12. Flat gasket according to one of the Claims 1 to 11, **characterised in that** the coating (2) is applied in line form.

13. Flat gasket according to one of the Claims 1 to 12, **characterised in that** the coating (2) is applied in the form of a line with varying width and/or height and/or shape.

14. Flat gasket according to one of the Claims 1 to 13, **characterised in that** the coating (2) is applied on two opposite sides of a metallic layer (1).

15. Flat gasket according to one of the Claims 1 to 14, **characterised in that** the coating (2) is applied on a metallic layer (4) in the area of a bead (3) of a second metallic layer (1).

16. Flat gasket according to one of the Claims 1 to 15, **characterised in that** the coating (2) is applied on two opposite sides of a bead (3).

17. Flat gasket according to at least one of the Claims 1 to 16, **characterised in that** the coating (2) is located on a bead (3).

18. Flat gasket according to one of the Claims 1 to 17, **characterised in that** the surface of the coating (2) substantially consists of the binding agent and/or a thermoplastic additive, or is equipped with an additional sealing layer.

19. Method for producing a flat gasket with at least one metallic layer, in which at least one gasket opening as well as at least one bead are formed, and a coating as a deformation delimiter is applied in and/or adjacent to the bead, where a mixture containing at least one filler and one binding agent, wherein the mass proportion of the filler is greater than the binding agent, is applied to a metallic layer (1, 4), whereby a spherical, particle shaped filler consisting of a metal, an alloy, or a ceramic, or mixtures of the same, the individual particles of which have a smoothed, rounded surface that is smaller than the particle volume is used; and the applied coating (2) is cured, whereby the filler is present in the form of spherical individual particles in the finished coating.

20. Method according to Claim 19, **characterised in that** the mixture is cured by means of introducing energy.

21. Method according to Claim 19 or 20, **characterised in that** a mixture ratio of filler to binding agent with a mass proportion of at least 2:1 is provided.

22. Method according to one of the Claims 19 to 21, **characterised in that** at least one thermoplastic additive is also added to the mixture.

23. Method according to one of the Claims 19 to 22, **characterised in that** the mixture is printed onto the metallic layer (1, 4).

24. Method according to one of the Claims 19 to 23, **characterised in that** the mixture is cured by means of a heat treatment.

## Revendications

1. Joint plat comprenant au moins une couche métallique (1), dans laquelle au moins une percée de joint ainsi qu'au moins une moulure (3) sont configurées et, dans la moulure et/ou de manière adjacente à celle-ci, est appliqué un revêtement (2) en tant que limiteur de déformation, lequel revêtement est composé d'au moins une matière de remplissage et d'un liant, la part massique de la matière de remplissage étant supérieure à la part de liant et la matière de remplissage étant présente sous la forme de particules individuelles sphériques, qui sont réalisées dans un métal, un alliage ou une céramique ou des mélanges de ceux-ci et qui comportent une surface lissée, arrondie et petite par rapport au volume de particules.

2. Joint plat selon la revendication 1, **caractérisé en ce que** les particules sont sphériques.

3. Joint plat selon la revendication 1 ou 2, **caractérisé en ce qu'**au moins 80 % des particules présentent une taille moyenne comprise entre 5 et 100 µm.

4. Joint plat selon la revendication 1, **caractérisé en ce que** la matière de remplissage est composée d'un alliage de cuivre et zinc.

5. Joint plat selon l'une des revendications 1 à 4, **caractérisé en ce qu'**un rapport de masse d'au moins 2:1 de matière de remplissage par rapport au liant est respecté.

6. Joint plat selon l'une des revendications 1 à 5, **caractérisé en ce que** la matière de remplissage est contenue avec une part massique ≥ 90 % dans le revêtement (2).

7. Joint plat selon l'une des revendications 1 à 6, **caractérisé en ce que** le liant est une résine thermodurcissable.

8. Joint plat selon la revendication 7, **caractérisé en ce que** la résine thermodurcissable est sélectionnée parmi la résine époxyde, la résine silicone et la résine polyamide.

9. Joint plat selon la revendication 7, **caractérisé en ce que** la résine thermodurcissable est une résine époxyde avec une base de bisphénol A.

10. Joint plat selon l'une des revendications 1 à 9, **caractérisé en ce qu'**en outre au moins un adjuvant thermoplastique est contenu.

11. Joint plat selon la revendication 10, **caractérisé en ce que** le/les adjuvant(s) est/sont sélectionné(s) parmi le PTFE, le PE, le PP et le PA.

12. Joint plat selon l'une des revendications 1 à 11, **caractérisé en ce que** le revêtement (2) est appliqué en forme de lignes.

13. Joint plat selon l'une des revendications 1 à 12, **caractérisé en ce que** le revêtement (2) est appliqué sous la forme d'une ligne avec une largeur et/ou hauteur et/ou forme variable(s).

14. Joint plat selon l'une des revendications 1 à 13, **caractérisé en ce que** le revêtement (2) est appliqué sur deux côtés opposés d'une couche métallique (1).

15. Joint plat selon l'une des revendications 1 à 14, **caractérisé en ce que** le revêtement (2) est appliqué sur une couche métallique (4), au niveau d'une moulure (3) d'une deuxième couche métallique (1).

16. Joint plat selon l'une des revendications 1 à 15, **caractérisé en ce que** le revêtement (2) est appliqué sur deux côtés opposés d'une moulure (3).

17. Joint plat selon au moins l'une des revendications 1 à 16, **caractérisé en ce que** le revêtement (2) est disposé dans une moulure (3).

18. Joint plat selon l'une des revendications 1 à 17, **caractérisé en ce que** la surface du revêtement (2) est essentiellement composée du liant et/ou d'un adjuvant thermoplastique ou est pourvue d'une couche de scellement supplémentaire.

19. Procédé de fabrication d'un joint plat comportant au moins une couche métallique, dans laquelle au moins une percée de joint ainsi qu'au moins une moulure sont configurées et, dans la moulure et/ou de manière adjacente à celle-ci, est appliqué un revêtement en tant que limiteur de déformation, dans lequel un mélange, qui contient au moins une matière de remplissage et un liant et dans lequel la part massique de la matière de remplissage est supérieure à la part de liant, est appliqué sur une couche métallique (1, 4), dans lequel procédé on utilise une matière de remplissage sphérique, sous forme de particules, qui est réalisé dans un métal, un alliage ou une céramique ou des mélanges de ceux-ci et dont les particules individuelles comportent une surface lissée, arrondie et petite par rapport au volume de particules ; et le revêtement appliqué est durci, la matière de remplissage étant présente dans le revêtement fini sous la forme de particules individuelles sphériques.

20. Procédé selon la revendication 19, **caractérisé en ce que** le mélange est durci par un apport d'énergie.

21. Procédé selon la revendication 19 ou 20, **caractérisé en ce qu'**une proportion de mélange de la matière de remplissage par rapport au liant est ajustée avec une part massique d'au moins 2:1.

22. Procédé selon l'une des revendications 19 à 21, **caractérisé en ce que** l'on ajoute en outre au mélange au moins un adjuvant thermoplastique.

23. Procédé selon l'une des revendications 19 à 22, **caractérisé en ce que** le mélange est appliqué par pression sur la couche métallique (1, 4).

24. Procédé selon l'une des revendications 19 à 23, **caractérisé en ce que** le mélange est durci au moyen d'un traitement thermique.
